# FASCICULE DE BREVET EUROPEEN

(11) **EP 0 403 337 B1**
(45) Date de publication et mention de la délivrance du brevet: **03.11.1993**
(21) Numéro de dépôt: 90401563.3
(22) Date de dépôt: 08.06.1990
(51) Int. Cl.: B60S 1/08

(54) **Système d'essuie-glace avec détecteur de pluie**
Scheibenwischersystem mit Regendetektor
Windscreen wiper system with rain detector

(30) Priorité: 12.06.1989 FR 8907715
(43) Date de publication de la demande: 19.12.1990
(73) Titulaire: VALEO SYSTEMES D'ESSUYAGE, 78180 Montigny-Le-Bretonneux (FR)
(72) Inventeur: Muller, Guy, F-91570 Bievres (FR)
(74) Mandataire: Gamonal, Didier

(56) Documents cités:
- EP-A- 0 249 031
- DE-A- 3 244 767
- DE-A- 3 538 553
- DE-A- 3 715 798
- PATENT ABSTRACTS OF JAPAN vol. 9, no. 219 (M-410)(1942) 06 septembre 1985,
- & JP-A-60 78844 (NIPPON DENSO) 04 mai 1985,
- PATENT ABSTRACTS OF JAPAN vol. 10, no. 22 (P-424)(2079) 28 janvier 1986,& JP-A-60 174931 (NAIRUSU BUHIN) 09 septembre 1985,

## Description

L'invention concerne les systèmes d'essuie-glace de pare-brise de véhicules.

Un but de l'invention est de prévoir un système d'essuie-glace auquel est associé un détecteur permettant de déclencher automatiquement le balayage lorsque le pare-brise reçoit de la pluie, et/ou permettant éventuellement de fournir un signal ou un ordre de nettoyage lorsque le pare-brise est sale, par déclenchement du balayage associé à une projection de liquide sur ledit pare-brise.

On a déjà proposé d'utiliser des détecteurs de pluie ou de saleté qui sont des détecteurs de transparence du pare-brise, tels que ceux mentionnés dans les documents JP-A-60 78844 ou DE-A-3 538 553 et qui sont constitués de la manière suivante, schématisée à la figure 1 : une source de lumière ponctuelle 10 alimentée par un circuit d'émission 12 éclaire le pare-brise 14 depuis le côté intérieur de celui-ci. La lumière est envoyée dans le pare-brise à travers une interface optique 16, prismatique ou lenticulaire, sous une incidence telle que la lumière pénètre dans le verre du pare-brise puis subisse des réflexions totales multiples à l'intérieur même du verre du pare-brise. Une interface optique 18 est placée à une distance correspondant à un nombre entier de réflexions du faisceau lumineux (4 réflexions sur la figure); cette interface optique 18, prismatique ou lenticulaire, permet au faisceau de sortir du pare-brise et d'être dirigé vers un détecteur de lumière 20. Celui-ci est couplé à un circuit de détection 22 qui traite le signal reçu du détecteur 20 et qui peut fournir un signal de déclenchement à un circuit de commande de puissance 24. Ce dernier est le circuit de commande d'un moteur 26 servant à entraîner les balais d'essuyage du système. Le circuit de commande de puissance peut bien entendu aussi être mis en route ou arrêté par un commutateur de commande manuel 28 qui a priorité sur le circuit 22.

Lorsque le pare-brise est propre et sec, la lumière subit des réflexions multiples avec une atténuation très faible dans le pare-brise. Lorsqu'il est mouillé, enneigé, ou sale, la lumière est absorbée ou diffusée aux points où elle devrait subir des réflexions totales parfaites vers l'intérieur du pare-brise. Il en résulte que le détecteur de lumière 20 reçoit une intensité lumineuse moins importante que lorsque le pare-brise est complètement propre. C'est cette différence d'intensité lumineuse qui est exploitée par le circuit de détection 22 pour déterminer s'il y a lieu ou non de déclencher le balayage.

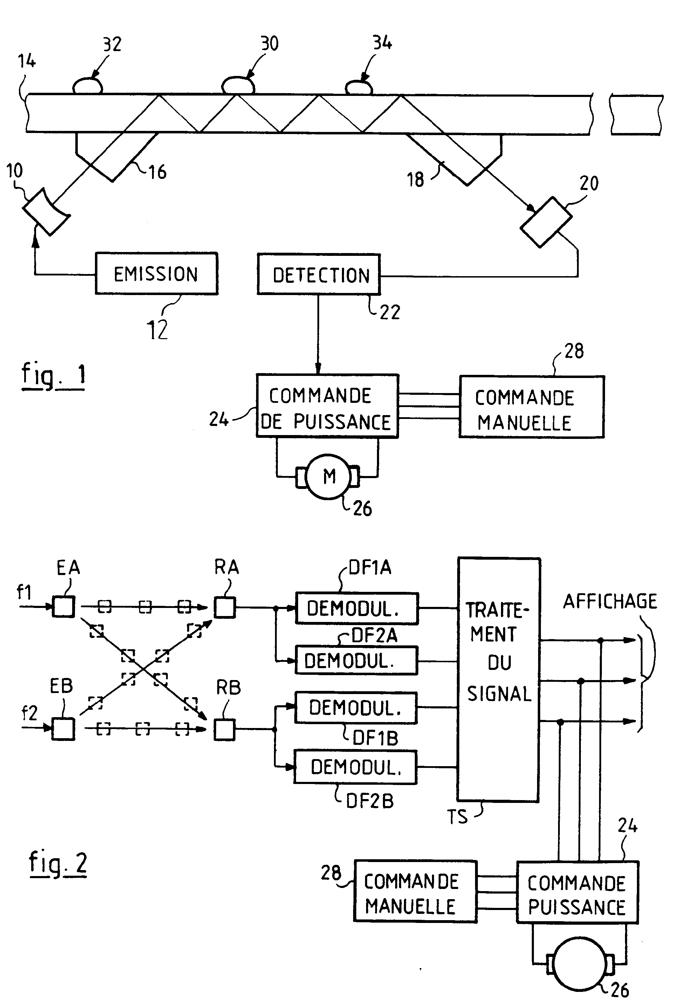

Un des inconvénients des capteurs de pluie proposés jusqu'à maintenant est le fait qu'ils effectuent une détection de pluie linéairement dans une zone de pare-brise très limitée et que la détection effectuée est très peu nuancée. En effet, on comprend en regardant la figure 1 que le détecteur de pluie ne fournit un signal de détection de pluie que si des gouttes de pluie sont tombées exactement aux endroits de réflexion de la lumière sur la face extérieure du pare-brise. La figure 1 montre par exemple une goutte 30 tombée à un de ces endroits, et d'autres gouttes 32, 34 tombées à d'autres endroits où elles n'influencent pas du tout le détecteur. D'autre part, on ne sait pas bien discriminer avec ce détecteur la nature des phénomènes qui engendrent une variation d'intensité lumineuse reçue, de sorte que le circuit de détection 22 n'a que très peu d'informations lui permettant de prendre une décision (décision de laisser le système dans son état actif ou inactif, décision de déclencher le balayage à petite ou grande vitesse ou en intermittence, décision de déclencher le lave-glace et trois coups de balayage, etc.).

La présente invention vise à améliorer les systèmes d'essuie-glace utilisant des détecteurs de transparence de pare-brise, en rendant ces détecteurs aptes à fournir des informations mieux contrôlées.

Pour cela, on propose selon l'invention de placer plusieurs sources de lumière modulées en fréquence et plusieurs détecteurs dans une même zone du pare-brise, le système comprenant un circuit de détection associé à chaque détecteur, ce circuit étant apte à démoduler chacune des fréquences des différentes sources et à fournir un signal correspondant à chacune des démodulations.

En principe, la distance entre n'importe quelle source et n'importe quel détecteur correspond à un nombre entier de réflexions totales de la lumière à l'intérieur du pare-brise. Par distance entre source et détecteur on entend ici la distance entre le point d'entrée des rayons lumineux issus de la source dans le pare-brise et le point de sortie de ces rayons hors du pare-brise vers le détecteur.

Grâce à cette construction, on peut obtenir une détection surfacique et une information plus complète sur la nature de la réduction de transparence du pare-brise, par exemple sur la taille et la répartition des gouttes de pluie. Cette information est plus complète que si un détecteur unique ou plusieurs détecteurs indépendants juxtaposés étaient prévus.

Il y aura de préférence autant de sources lumineuses que de détecteurs susceptibles de recevoir les rayons lumineux issus de ces sources.

D'autres caractéristiques et avantages de l'invention apparaîtront à la lecture de la description détaillée qui suit et qui est faite en référence aux dessins annexés dans lesquels :
- la figure 1, déjà décrite, représente le principe de base connu permettant la détection de pluie sur le pare-brise;
- la figure 2 représente la construction selon l'invention.

Mécaniquement et optiquement, on utilise selon l'invention les mêmes principes que ceux qui ont été décrits à propos de la figure 1. Ils ne seront donc pas redécrits. On a simplement représenté à la figure 2 une vue en plan schématique du système selon l'invention, montrant les différentes positions respectives des sources de lumière (plus exactement du point d'entrée des rayons sur le pare-brise après passage dans l'interface lenticulaire ou prismatique collée sur le pare-brise), et les différentes positions des détecteurs (ou plus exactement des points de sortie des rayons vers ces détecteurs).

Par souci de simplification, on n'a représenté que deux sources d'émission de lumière EA et EB, et deux détecteurs de réception RA et RB. Mais l'invention peut être appliquée à un plus grand nombre de sources et de détecteurs. Les points d'entrée des rayons issus de la source ont été représentés sous forme de carrés portant les références des sources de lumière correspondante (EA et EB). De même, les points de sortie des rayons ont été représentés sous forme de carrés portant les noms des détecteurs correspondants (RA et RB).

On prévoit que la disposition relative de la source EA et du détecteur RA est telle que ce détecteur puisse recevoir la lumière émise par la source EA après que cette lumière ait subi plusieurs réflexions totales à l'intérieur du pare-brise. On condensera par la suite cette expression en disant que la distance entre la source EA et le détecteur RA correspond à un nombre entier de réflexions totales des rayons à l'intérieur du pare-brise.

De même aussi, la disposition relative de la source EB et du détecteur RB correspond à un nombre entier de réflexions à l'intérieur du pare-brise. Mais de plus, on prévoit que la distance diagonale entre la source EA et le détecteur RB et la distance entre la source EB et le détecteur RA correspondent aussi à des nombres entiers de réflexions totales.

Pour illustrer cette construction, on a représenté par des carrés pointillés les zones de réflexion totale des rayons sur la face extérieure du pare-brise.

On aboutit ainsi à une construction dans laquelle le détecteur de pluie occupe un rectangle défini par les positions de toutes les sources et tous les détecteurs susceptibles de recevoir les rayons issus de ces sources. Ce rectangle de détection de pluie est placé dans la zone de pare-brise balayée par l'essuie-glace. Il occupe quelques centimètres carrés ou dizaines de centimètres carrés, de sorte qu'il ne gêne pas la vision du conducteur du véhicule.

Les sources lumineuses sont de préférence peu directives de manière à pouvoir envoyer des rayons vers tous les détecteurs de la zone de détection de pluie. C'est d'ailleurs là un des avantages de l'invention que de pouvoir utiliser des sources de lumière peu directives, beaucoup moins coûteuses que des sources directives.

Avantageusement, la source de lumière EA est modulée à une première fréquence f1 et la source de lumière EB est modulée à une deuxième fréquence f2, mais il peut être envisagé que les sources de lumières EA et EB soient modulées à la même fréquence.

Chacun des détecteurs est relié à un circuit de détection capable de démoduler les fréquences des différentes sources de lumière. Comme il y a, à titre d'exemple, ici deux sources et deux fréquences, il y a deux démodulateurs DF1A et DF2A pour le premier détecteur RA, et deux démodulateurs DF1B et DF2B pour le deuxième détecteur RB. On notera que la modulation et la démodulation de fréquence permet de s'affranchir de l'éclairement ambiant qui est une composante toujours présente mais non modulée à une fréquence F1 ou F2 du signal lumineux détecté par les détecteurs RA et RB.

Les signaux détectés par les quatre démodulateurs sont appliqués à un circuit (TS) de traitement d'informations (analogique et/ou numérique) qui établit à partir de ces signaux des signaux de contrôle destinés au circuit de commande du moteur d'essuyage de pare-brise et destinés aussi éventuellement à un affichage sur le tableau de bord du véhicule.

Le traitement est un traitement simple consistant essentiellement en une comparaison entre les niveaux de signaux reçus et différents seuils, puis un traitement logique des résultats des comparaisons à travers des portes logiques ET, OU, NAND, NI. Le détail du traitement dépend de l'application envisagée et des conditions d'installation du système. Mais ce qu'il est important de remarquer, c'est qu'on obtient avec ce système plus d'informations que l'on n'en aurait obtenu avec un seul ensemble source-détecteur ou avec plusieurs ensembles indépendants les uns des autres.

Si on prend par exemple la figure 2, on voit que les points de réflexion totale des : rayons sur le pare-brise sont nombreux et que par conséquent les gouttes de pluie qui tombent ont de fortes chances d'être détectées aussi bien lorsque les gouttes sont fines et uniformément distribuées (petite pluie fine) que lorsqu'elles sont grosses et irrégulièrement réparties. Mais de plus, le système permet justement de faire une distinction entre la pluie fine et les grosses gouttes : dans le premier cas, les détecteurs ont toutes les chances de capter une lumière atténuée en provenance de chacune des sources, alors que dans le second cas, certains trajets lumineux seront affectés par une goutte tandis que d'autres ne le seront pas. La modulation à des fréquences différentes permettra de faire la distinction entre plusieurs trajets aboutissant à un même détecteur. L'irrégularité dans les atténuations de signal lumineux sera détectée par le circuit de traitement TS et constituera une information utile pouvant servir dans la commande du moteur d'essuyage, ou d'autres organes tels que la pompe de lave-glace.

On peut très bien envisager par exemple que la détection de grosses gouttes irrégulièrement réparties déclenche un balayage à grande vitesse, tandis que des fines gouttes uniformément distribuées déclencheraient un balayage à petite vitesse.

On pourra éventuellement choisir plusieurs vitesses de balayage ou plusieurs temporisations de balayage intermittent en fonction des informations apportées par le système, notamment les informations de répartition des défauts de transparence, informations que l'on n'obtenait pas avec les systèmes antérieurs.

Selon une autre caractéristique de l'invention, on affine la détection en utilisant également une mesure de l'effort accompli par le moteur de l'essuie-glace, pour différencier un pare-brise sale d'un pare-brise mouillé par la pluie. En effet, si le balayage est déclenché par suite de la détection d'une réduction de la transparence du pare-brise, il est possible que la réduction de transparence soit due en fait à de la saleté (boue, etc.). Dans ce cas, le balayage se produira sur une vitre sèche et l'effort du moteur sera important. On peut détecter cet effort important par la mesure du courant consommé par le moteur. Couplé à la mesure de transparence, la mesure du couple du moteur permettra par exemple de déclencher le lavage du pare-brise en même temps que le balayage.

## Revendications

1. Système d'essuie-glace de véhicule utilisant un dispositif détecteur de transparence de pare-brise, comprenant plusieurs sources de lumière (EA, EB) modulées en fréquence et plusieurs détecteurs (RA, RB) dans une même zone du pare-brise, caractérisé en ce que le système comprend un circuit de démodulation (DF1A, DF2A, DF1B, DF2B) associé à chaque détecteur (RA,RB) et en ce que le circuit (DF1A, DF2A, DF1B, DF2B) est apte à démoduler chacune des fréquences (f1,f2) des différentes sources (EA,EB) et à fournir un signal correspondant à chacune des démodulations.

2. Système d'essuie-glace selon la revendication 1, caractérisé en ce que la fréquence de modulation (F1,F2) est différente pour chaque source de lumière (EA,EB).

3. Système d'essuie-glace selon l'une des revendications 1 ou 2, caractérisé en ce que la distance entre n'importe quelle source (EA, EB) et n'importe quel détecteur (RA, RB) correspond à un nombre entier de réflexions totales de la lumière à l'intérieur du pare-brise.

4. Système selon l'une des revendications 1 à 3, caractérisé en ce qu'il comporte autant de sources (EA,EB) que de détecteurs (RA, RB).

5. Système selon l'une des revendications 1 à 4, caractérisé en ce qu'il comporte un circuit de traitement (TS) des signaux issus des circuits de démodulation (DF1A, DF2A, DF1B, DF2B), pour élaborer des signaux de commande de balayage en fonction des niveaux respectifs de signaux détectés par les détecteurs (RA,RB) aux fréquences de modulation.

6. Système selon l'une des revendications précédentes, caractérisé en ce qu'il comprend un moyen pour élaborer un ordre de commande en fonction des signaux issus des circuits de démodulation (DF1A, DF2A, DF1B, DF2B) et du courant consommé par le moteur (26) de balayage.

## Patentansprüche

1. Fahrzeug-Scheibenwischersystem mit Windschutzscheiben-Transparenzdetektor-Vorrichtung, enthaltend mehrere frequenzmodulierte Lichtquellen (EA, EB) und mehrere Detektoren (RA, RB) im gleichen Windschutzscheibenbereich, **dadurch gekennzeichnet,** daß das System eine Demodulationsschaltung (DF1A, DF2A, DF1B, DF2B) für jeden Detektor (RA, RB) enthält und daß die Schaltung (DF1A, DF2A, DF1B, DF2B) geeignet ist, jede der Frequenzen (f1, f2) der verschiedenen Lichtquellen (EA, EB) zu demodulieren und ein jeder einzelnen Demodulation entsprechendes Signal zu liefern.

2. Scheibenwischersystem nach Anspruch 1, **dadurch gekennzeichnet**, daß die Modulations frequenz (F1, F2) für jede Lichtquelle (EA, EB) verschieden ist.

3. Scheibenwischersystem nach Anspruch 1, **da****durch gekennzeichnet,** daß der Abstand zwischen jeder beliebigen Lichtquelle (EA, EB) und jedem beliebigen Detektor (RA, RB) einer ganzen Zahl von Gesamtreflexionen des Lichts im Innern der Windschutzscheibe entspricht.

4. System nach einem der Ansprüche 1 bis 3, **dadurch gekennzeichnet**, daß es ebensoviele Lichtquellen (EA, EB) wie Detektoren (RA, RB) enthält.

5. System nach einem der Ansprüche 1 bis 4, **dadurch gekennzeichnet**, daß es eine Schaltung zur Verarbeitung (TS) der von den Demodulationsschaltungen (DF1A, DF2A, DF1B, DF2B) ausgehenden Signale enthält, um Wisch-Steuersignale entsprechend den jeweiligen Ebenen der von den Detektoren (RA, RB) bei den Modulationsfrequenzen festgestellten Signale zu erzeugen.

6. System nach einem der vorherigen Ansprüche, **dadurch gekennzeichnet**, daß es ein Mittel zur Erzeugung eines Steuerbefehls entsprechend den von den Demodulationsschaltungen (DF1A, DF2A, DF1B, DF2B) ausgehenden Signalen und dem vom Wischmotor (26) verbrauchten Strom enthält.

## Claims

1. A windscreen wiper system for a vehicle employing a windscreen transparency director, characterised in that the detector includes a plurality of light sources (EA, EB) which are frequency modulated, together with a plurality of detectors (RA, RB) in a common zone of the windscreen, the system including a demodulation circuit (DF1A, DF2A, DF1B, DF2B) associated with each detector, the said circuit being adapted to demodulate each of the frequencies from different sources and to supply a signal corresponding to each of the demodulations.

2. A windscreen wiper system according to Claim 1, characterised in that the modulation frequency (F1, F2) is different for each light source (EA, EB).

3. A windscreen wiper system according to Claim 1 or Claim 2, characterised in that the distance between any one source (EA, EB) and any one detector (RA, RB) corresponds to a whole number of total reflections of the light within the windscreen.

4. A system according to one of Claims 1 to 3, characterised in that it includes as many sources (EA, EB) as detectors (RA, RB).

5. A system according to one of Claims 1 to 4, characterised in that it includes a processing circuit (TS) for processing output signals from the demodulation circuits (DF1A, DF2A, DF1B, DF2B), whereby to generate signals for control of wiping in accordance with the respective signal levels detected by the detectors (RA, RB) at the modulation frequencies.

6. A system according to one of the preceding Claims, characterised in that it includes a means for generating a command in response to the output signals from the demodulation circuits (DF1A, DF2A, DF1B, DF2B) and to the current consumed by the wiper motor (26).
